# FASCICULE DE BREVET EUROPEEN

(11) **EP 1 978 221 B1**
(45) Date de publication et mention de la délivrance du brevet: **04.07.2012**
(21) Numéro de dépôt: 08102575.1
(22) Date de dépôt: 13.03.2008
(51) Int. Cl.: F02C 7/052, F02K 3/075, F02C 7/05, F02C 7/055

(54) **Partie avant de turbomachine comprenant un système de déflecteur de corps étrangers, tels que des grêlons**
Vorderteil einer Strömungsmaschine, die ein Deflektorsystem für Fremdkörper, wie Hagelkörner, umfasst
Front part of a turbomachine comprising a system for deflecting foreign bodies, such as hailstones

(30) Priorité: 30.03.2007 FR 0754153
(43) Date de publication de la demande: 08.10.2008
(73) Titulaire: SNECMA, 75015 Paris (FR)
(72) Inventeur: Bart, Jacques, René, 91450, Soisy sur Seine (FR); Behaghel, Laurent, 91230, Montgeron (FR); Rousselin, Stéphane, 77850, Hericy (FR)
(74) Mandataire: Ilgart, Jean-Christophe

(56) Documents cités:
- FR-A- 2 664 018
- US-A- 5 279 109
- US-A1- 2003 196 548

## Description

### DOMAINE TECHNIQUE

La présente invention se rapporte de façon générale à une partie avant de turbomachine, dont la conception permet d'empêcher / de limiter l'accès de corps étrangers, tels que des grêlons, à l'intérieur d'un canal primaire annulaire de la turbomachine.

L'invention s'applique à tout type de turbomachine, de préférence pour aéronef, et s'applique de préférence aux turbomachines dans lesquelles il n'est pas prévu de compresseur basse pression en entrée du canal primaire annulaire, ce type de turbomachine étant généralement dénommé de « petite taille » en raison du faible diamètre de soufflante qui y est associé.

### ETAT DE LA TECHNIQUE ANTERIEURE

Dans les turbomachines existantes équipées de compresseur basse pression en entrée du canal primaire annulaire, également dénommé « booster », il est généralement prévu un système de commande asservi entre ce même booster et le compresseur haute pression situé plus en aval dans le canal primaire, ce système de commande pouvant être piloté afin de provoquer l'ouverture de trappes depuis la surface extérieure du canal primaire. Durant les phases d'ouverture de ces trappes dans le canal primaire, une partie de l'air du flux primaire est alors volontairement dévié par les trappes pour rejoindre l'air plus frais du flux secondaire, qui circule lui dans un canal secondaire annulaire situé radialement vers l'extérieur par rapport au canal primaire. Un tel système est décrit dans le document US-A-5 279 109.

Ce système de commande asservi, également connu sous l'appellation VBV (de l'anglais « Variable Bleed Valve »), présente comme fonction principale le déchargement de la sortie du booster, afin d'éviter son pompage dans certaines conditions.

Par ailleurs, les trappes déployées du système de commande asservi permettent simultanément d'assurer l'écopage des corps étrangers tels que les grêlons, qui, entrant en contact avec ces trappes en saillie dans le canal primaire, sont redirigés vers le canal annulaire secondaire dans lequel ils ne risquent plus de provoquer l'extinction de la chambre de combustion. Ce phénomène se produit de manière semblable lorsque la technologie employée consiste à déployer les trappes radialement vers l'extérieur par rapport au canal primaire annulaire, en raison de l'effet de sussion observé.

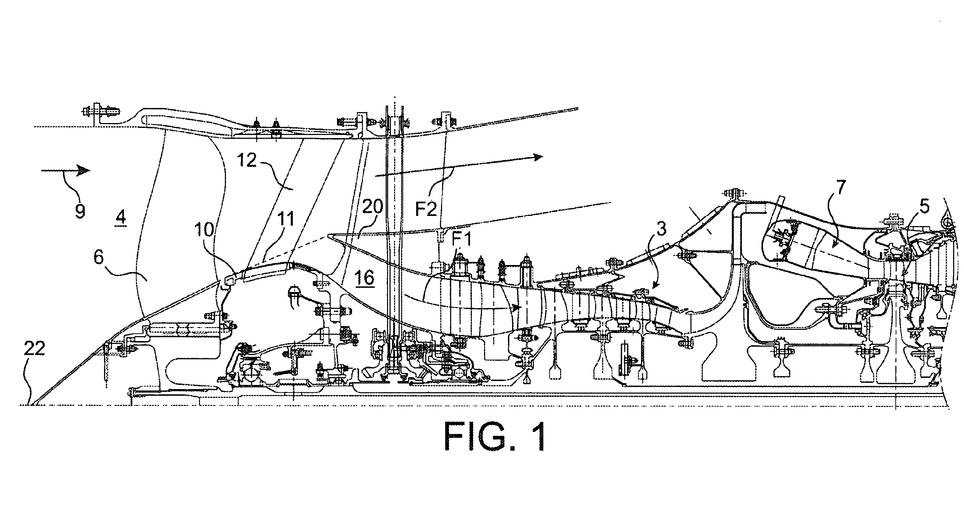

Or sur les turbomachines de plus petite taille telle que celle montrée sur la figure 1, l'entrée du canal primaire annulaire 16 est généralement dépourvue de booster, de sorte qu'il n'est pas non plus nécessaire de prévoir l'implantation d'un système de commande asservi du type décrit ci-dessus, en ce sens que les risques de pompage du booster n'existent bien évidemment plus. De toute façon, l'implantation d'un tel système de commande asservi sur une turbomachine de petite taille s'avère souvent impossible en raison du faible espace disponible entre les deux canaux annulaires, espace dans lequel est habituellement logé le système de commande asservi sur les turbomachines de plus grande taille.

Ainsi, dans ce cas où le canal primaire n'est plus équipé du système de commande asservi de type VBV, la fonction de déflection des grêlons ne peut plus être assurée.

Pour faire face à ce problème, il a été proposé dans l'art antérieur de reculer au maximum le bec de séparation 20 des flux primaire F1 et flux secondaire F2, afin que l'entrée du canal primaire annulaire 16 soit sensiblement « masquée » par la surface extérieure de la virole interne de support 10 des aubages directeurs de sortie de soufflante 12, comme le montre la ligne fictive en pointillé 11 sur la figure 1.

Néanmoins, un recul trop important du bec de séparation peut conduire à une mauvaise alimentation en air du canal primaire annulaire, en raison de sa position masquée évoquée ci-dessus.

D'une façon générale, le compromis entre le recul suffisant du bec de séparation pour limiter l'introduction des grêlons et autres corps étrangers dans le canal primaire annulaire, et son avancée suffisante pour assurer une alimentation satisfaisante du canal primaire annulaire en air, reste souvent extrêmement difficile à trouver.

Ainsi, il existe un besoin en ce qui concerne une partie avant de turbomachine de conception simple et astucieuse, permettant d'empêcher / de limiter l'accès de corps étrangers, tels que des grêlons, à l'intérieur d'un canal primaire annulaire, notamment en vue de son implantation dans une turbomachine de petite taille dépourvue de booster.

### EXPOSÉ DE L'INVENTION

Pour ce faire, l'invention a pour objet une partie avant de turbomachine comprenant une virole interne de support des aubages directeurs de sortie de soufflante, un bec de séparation des flux duquel sont issus un canal primaire annulaire et un canal secondaire annulaire de turbomachine. Selon l'invention, elle comprend en outre au moins un système de déflecteur destiné à empêcher/limiter l'accès de corps étrangers tels que des grêlons à l'intérieur dudit canal primaire de la turbomachine, ledit système de déflecteur comprenant au moins une surface déflectrice ainsi qu'un actionneur permettant de déplacer ladite surface déflectrice d'une position escamotée à une position déployée assurant la déflection des corps étrangers, et/ou inversement, ledit système de déflecteur étant monté sur ladite virole interne de support des aubages directeurs de sortie de soufflante, de sorte qu'en position déployée, une extrémité aval de ladite surface déflectrice se situe en amont dudit bec de séparation des flux.

Ainsi, l'une des particularités de la présente invention réside dans la fourniture en entrée du canal primaire annulaire d'un ou plusieurs systèmes de déflecteur de corps étrangers, tels que des grêlons, ces systèmes étant de préférence choisis pour être de conception simple, peu coûteuse et peu encombrante. Avec cette solution technique, les corps étrangers peuvent avantageusement être déviés de leur trajectoire par la surface déflectrice, en amont du canal primaire annulaire. En d'autres termes, ils sont donc déviés par la surface déflectrice avant d'atteindre l'entrée du canal primaire annulaire, de sorte que les risques qu'ils pénètrent à l'intérieur de ce dernier canal, après avoir heurté la surface déflectrice, sont quasiment réduits à néant.

Le système de déflecteur peut facilement être implanté sur tout type de turbomachine, et en particulier sur les turbomachines dites de petite taille, dépourvues de booster ou compresseur basse pression. L'invention peut alors de préférence servir à l'écopage des grêlons comme le faisaient les systèmes de commande asservis de type VBV de l'art antérieur, de sorte que la présence de ces derniers n'est plus requise pour assurer la fonction d'écopage précitée. Par conséquent, l'invention apporte une solution efficace et astucieuse en particulier pour les turbomachines dépourvues de booster, et donc également dépourvues de système de commande asservi de type VBV.

Le système de déflecteur prévu dans la présente l'invention, qui est implanté sur la virole interne de support des aubages directeurs de sortie de soufflante afin d'empêcher / de limiter l'accès des grêlons à l'intérieur du canal primaire annulaire, permet également de limiter voire de supprimer le recul du bec de séparation des flux primaire et secondaire rencontré antérieurement, étant donné que l'écopage des grêlons s'effectue à présent au moins en partie à l'aide du système selon l'invention, et non plus uniquement grâce au recul du bec de séparation pour le masquage de l'entrée du canal primaire. Par conséquent, le problème de l'art antérieur concernant l'alimentation non satisfaisante en air du canal annulaire, pour cause de recul trop important du bec de séparation, peut être éradiqué grâce à la présente invention.

De préférence, ledit système de déflecteur est monté sur ladite virole interne de support des aubages directeurs de sortie de soufflante, en aval desdits aubages directeurs de sortie de soufflante, mais toujours en amont du bec de séparation des flux. En d'autres termes, le système de déflecteur se situe de préférence à proximité de l'entrée du canal primaire annulaire, en amont de celle-ci, cet emplacement étant privilégié car il correspond à celui offrant la plus grande efficacité au système de déflecteur.

Toujours de manière préférentielle, en section longitudinale quelconque passant par ledit système de déflecteur, une ligne droite fictive correspondant à une direction tangentielle de ladite extrémité aval de ladite surface déflectrice, en position déployée, passe en amont d'une extrémité amont dudit bec de séparation.

Cette particularité a été préférentiellement adoptée suite au constat selon lequel quelque soit l'incidence du grêlon impactant la structure de la partie avant de turbomachine, il a tendance après l'impact à fuser tangentiellement à la paroi de la structure impactée. Ainsi, même si la surface déflectrice ne se déploie pas radialement jusqu'à hauteur du bec de séparation, les grêlons impactant l'extrémité aval de ladite surface déflectrice ne pénétreront pas au sein du canal primaire annulaire, mais suivront la ligne fictive précitée.

De préférence, ledit actionneur est réalisé en alliage à mémoire de forme de manière à permettre, lorsqu'il atteint une température de transition donnée lui imposant d'adopter sa forme mémorisée, de placer ladite surface déflectrice dans la position déployée assurant la déflection des corps étrangers, et ledit système de déflecteur comprend en outre des moyens élastiques de rappel permettant, lorsque ledit actionneur présente une température inférieure à ladite température de transition donnée, de rappeler ladite surface déflectrice dans sa position escamotée.

Dans un tel cas, la nature de l'actionneur procure une grande fiabilité au système de déflecteur, ainsi qu'une importante longévité.

La fiabilité obtenue s'explique en partie par une grande confiance dans le déploiement/escamotage de la surface déflectrice, procurée par les propriétés physiques du matériau de l'actionneur en alliage à mémoire de forme, propriétés qui sont directement liées à la température du matériau.

A cet égard, il est noté que la modification de la température de l'actionneur peut facilement être effectuée en prélevant de l'air chaud dans une portion adéquate de la turbomachine, comme par exemple de l'air chaud provenant du compresseur.

Avec une telle configuration, on peut prévoir que ledit actionneur et ladite surface déflectrice sont formés par un même élément réalisé en alliage à mémoire de forme. Alternativement, il est également possible de prévoir que seul l'actionneur est réalisé en alliage à mémoire de forme. Dans un tel cas, l'actionneur peut alors constituer la liaison mécanique entre la virole interne de support et la surface déflectrice réalisée dans un matériau classique, autre que du type en alliage à mémoire de forme.

De préférence, ledit élément réalisé en alliage à mémoire de forme prend la forme d'une lame déflectrice, et lesdits moyens élastiques de rappel prennent la forme d'une lame élastique couplée mécaniquement à ladite lame déflectrice, et superposée à cette dernière.

Un espace de réception d'air chaud peut être prévu entre ladite lame élastique et ladite lame déflectrice, afin d'autoriser une bonne répartition de l'air chaud tout le long de la lame déflectrice réalisée en alliage à mémoire de forme.

De préférence, le système de déflecteur comporte une entrée d'air chaud communiquant avec ledit espace de réception d'air chaud, cette entrée d'air chaud prenant la forme d'un plot creux.

De préférence, la partie avant de turbomachine est équipée d'une pluralité de systèmes de déflecteur de corps étrangers, espacés angulairement les uns des autres autour d'un axe longitudinal de turbomachine.

L'implantation de chaque système de déflecteur de corps étrangers sur ladite virole interne de support des aubages directeurs de sortie de soufflante est de préférence réalisée par emboutissage du plot creux formant entrée d'air chaud du système de déflecteur, et traversant cette virole interne.

Toujours de manière préférentielle, ladite entrée d'air chaud de chaque système de déflecteur de corps étrangers traverse ladite virole interne de support des aubages directeurs de sortie de soufflante, et ladite partie avant de turbomachine comprend un distributeur d'air chaud situé en regard et radialement vers l'intérieur par rapport à chaque système de déflecteur.

Comme mentionné précédemment, ledit distributeur d'air chaud est de préférence alimenté en air chaud par de l'air provenant d'un compresseur de la turbomachine.

De préférence, ledit distributeur présente une pluralité de sorties espacées angulairement les unes des autres autour dudit axe longitudinal de turbomachine, chaque sortie étant en regard respectivement d'une entrée d'air chaud d'un système de déflecteur de corps étrangers. Ainsi, cela permet avantageusement de disposer d'un distributeur unique pour alimenter la totalité des systèmes de déflecteur.

De préférence, en position déployée assurant la déflection des corps étrangers, ladite surface déflectrice prend en coupe longitudinale la forme d'une ligne courbe s'ouvrant vers l'amont et radialement vers l'extérieur de la turbomachine, cette forme étant tout à fait adaptée pour assurer une déviation satisfaisante des corps étrangers tels que les grêlons.

Pour des raisons de continuité aérodynamique, en position escamotée, ladite extrémité aval de la surface déflectrice affleure de préférence la surface extérieure de ladite virole interne de support des aubages directeurs de sortie de soufflante.

L'invention a également pour objet une turbomachine comprenant une partie avant telle que décrite ci-dessus.

L'invention a aussi pour objet un système de déflecteur pour turbomachine, destiné à empêcher/limiter l'accès de corps étrangers tel que des grêlons à l'intérieur d'un canal primaire de la turbomachine, ledit système de déflecteur comprenant au moins une surface déflectrice ainsi qu'un actionneur permettant de déplacer ladite surface déflectrice d'une position escamotée à une position déployée assurant la déflection des corps étrangers. Selon l'invention, ledit actionneur est réalisé en alliage à mémoire de forme de manière à permettre, lorsqu'il atteint une température de transition donnée lui imposant d'adopter sa forme mémorisée, de placer ladite surface déflectrice dans la position déployée assurant la déflection des corps étrangers, et ledit système de déflecteur comprend en outre des moyens élastiques de rappel permettant, lorsque ledit actionneur présente une température inférieure à ladite température de transition donnée, de rappeler ladite surface déflectrice dans sa position escamotée.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1, déjà partiellement décrite, représente une partie avant de turbomachine selon une réalisation de l'art antérieur ;
- la figure 2 représente une demi-vue en coupe longitudinale d'une partie avant de turbomachine selon un mode de réalisation préféré de la présente invention, le système de déflecteur de corps étrangers étant montré dans sa position escamotée ;
- la figure 3 représente une vue partielle de dessus de la partie avant de turbomachine montrée sur la figure 2 ; et
- la figure 4 représente une vue partielle agrandie de celle montrée sur la figure 2, avec le système de déflecteur de corps étrangers représenté dans d'une part dans sa position escamotée, et d'autre part dans sa position déployée assurant la déflection des corps étrangers.

### EXPOSÉ DÉTAILLÉ DE MODES DE RÉALISATION PRÉFÉRÉS

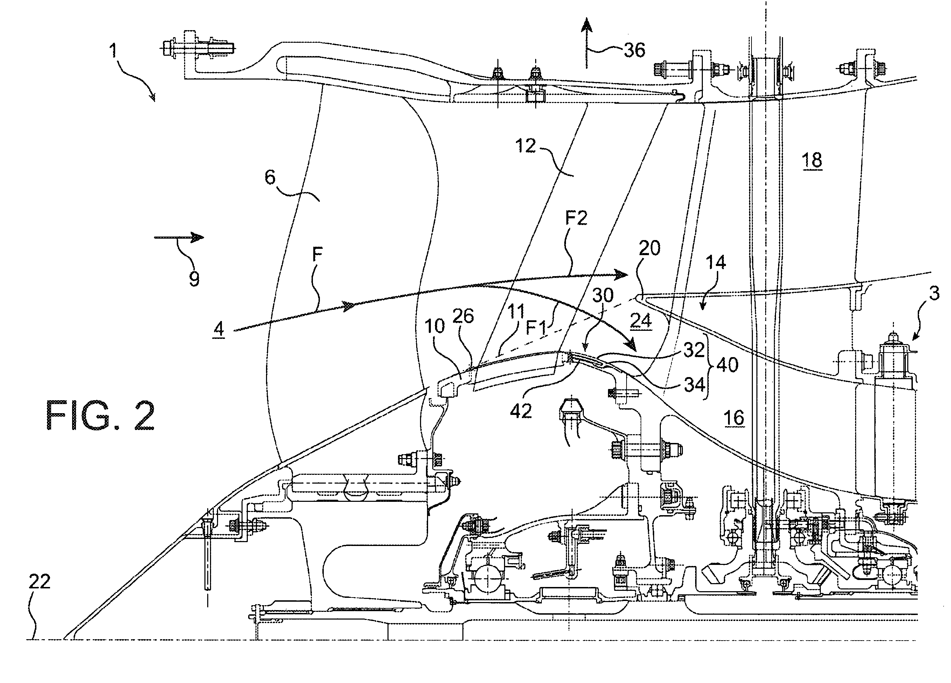

En référence tout d'abord à la figure 2, on peut apercevoir une partie avant 1 de turbomachine pour aéronef, du type dépourvue de compresseur basse pression et de petite taille. Cette turbomachine 1 se présente sous la forme d'un mode de réalisation préféré de la présente invention, et dispose d'une conception globalement similaire à celle montrée sur la figure 1, à savoir comprenant un unique compresseur HP 3 et une unique turbine HP 5, entre lesquels se trouve une chambre de combustion 7. A cet égard, sur les figures, les éléments portant les mêmes références numériques correspondent à des éléments identiques ou similaires.

Plus précisément en ce qui concerne la partie avant 1, celle-ci dispose dans une direction générale d'écoulement du fluide à travers cette turbomachine, allant de l'amont vers l'aval comme cela est représenté schématiquement par la flèche 9, d'une entrée d'air 4, d'une soufflante 6, d'une virole interne 10 de support des aubages directeurs de sortie de soufflante 12, et d'un bec de séparation des flux 14 duquel sont issus un canal primaire annulaire 16, et un canal secondaire annulaire 18 agencé radialement vers l'extérieur par rapport au canal primaire 16. Bien entendu, ces éléments classiques connus de l'homme du métier disposent chacun d'une forme annulaire, centrée sur un axe longitudinal 22 de la turbomachine.

Ainsi, le flux d'air F traversant la soufflante 6 et les aubages directeurs de sortie de soufflante 12 se divise en deux flux distincts suite à son entrée au contact avec l'extrémité amont 20 du bec de séparation 14, à savoir en un flux primaire F1 pénétrant dans le canal 16 et un flux secondaire F2 pénétrant dans le canal 18.

Afin de limiter l'introduction de corps étrangers tels que des grêlons dans le canal primaire 16, le bec de séparation 20 est placé de manière à ce que l'entrée 24 du canal primaire soit sensiblement « masquée » par la surface extérieure de la virole interne de support 10, comme le montre la ligne fictive en pointillé 11 sur la figure 2. Néanmoins, le recul adopté peut être moins important que celui rencontré antérieurement et discuté en référence à la figure 1 montrant une réalisation de l'art antérieur, et ce dans un souci d'assurer une meilleure alimentation en air du canal primaire annulaire 16.

La nature masquée de l'entrée 24 provient du fait qu'un grêlon impactant la virole interne de support 10 aura tendance à fuser sensiblement tangentiellement à la surface extérieure de cette virole, et ceci quelque soit la trajectoire du grêlon avant impact. Par conséquent, tout grêlon impactant la virole interne de support 10 avant le point 26 duquel est issu la ligne fictive précitée 11, correspondant à une direction tangentielle de la section de la virole en ce point, sera dévié par cette virole d'une manière telle qu'il ne pénètrera pas dans le canal primaire 16, mais passera radialement vers l'extérieur par rapport à l'entrée 24 de ce canal 16.

Pour limiter encore davantage l'introduction de corps étrangers tels que des grêlons dans le canal primaire 16, l'une des particularités de la présente invention réside dans l'implantation d'une pluralité de systèmes de déflecteur 30 sur la virole interne de support 10 des aubages 12.

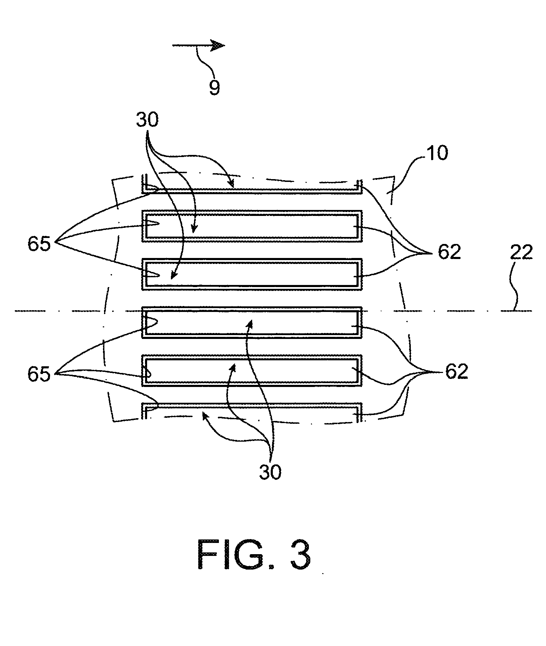

Les systèmes de déflecteur 30 sont espacés angulairement les uns des autres autour de l'axe longitudinal 22, comme le montre schématiquement la figure 3. De préférence, ils sont sensiblement rapprochés les uns des autres afin de former conjointement sensiblement un anneau déflecteur autour de la virole interne de support 24. Lorsque les surfaces déflectrices sont en position déployée telle qu'elle sera décrite ci-après, des espaces libres subsistent entre les surfaces déflectrices directement consécutives dans la direction angulaire/ circonférentielle, ce qui permet notamment de continuer à laisser passer de l'air en direction du canal primaire 16.

En référence à nouveau à la figure 2 sur laquelle on peut apercevoir l'un des systèmes de déflecteur 30, celui-ci comprend une surface déflectrice 32 ainsi qu'un actionneur 34 permettant de déplacer la surface déflectrice d'une position escamotée représentée sur cette figure, à une position déployée assurant la déflection des corps étrangers tels que les grêlons. Dans ce mode de réalisation préféré, l'actionneur 34 et la surface déflectrice 32 sont formés par un même élément réalisé en alliage à mémoire de forme, comme cela sera détaillé ci-après.

Le système de déflecteur 30 se situe globalement en amont de l'extrémité amont 20 du bec de séparation 14, donc en amont de l'entrée 24 du canal primaire 16, tout en restant rapproché de celle-ci. De plus, il est agencé sur la virole interne de support 10 en aval des aubages directeurs de sortie de soufflante 12, ce qui le place sensiblement au niveau de la portion de la virole 10 le plus large dans la direction radiale schématisée par la flèche 36, comme le montre la figure 2.

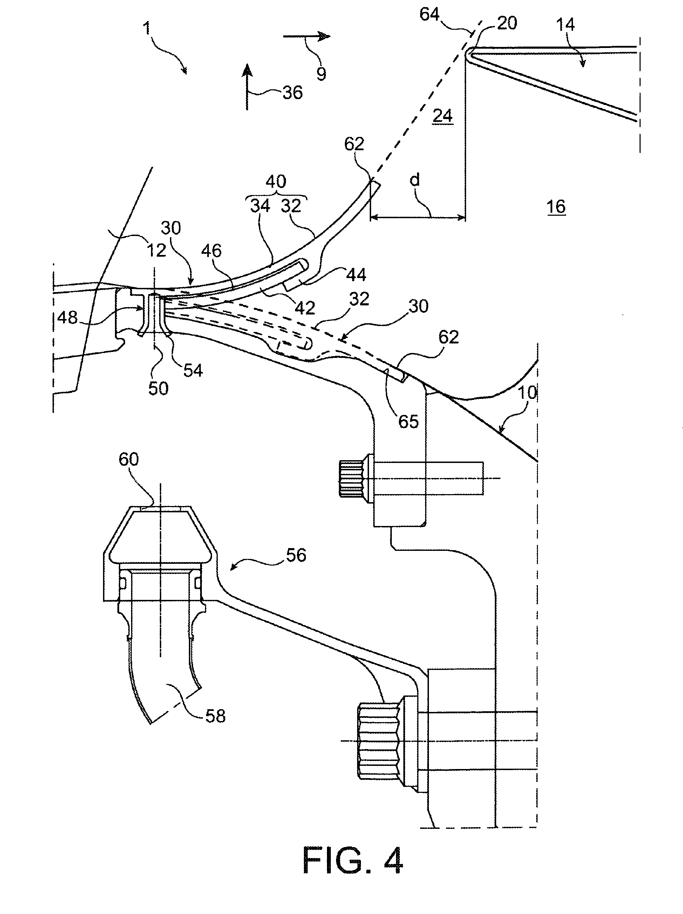

De préférence, l'actionneur 34 et la surface déflectrice 32 sont conjointement réalisés à l'aide d'une unique lame déflectrice 40 fabriquée en alliage à mémoire de forme, de manière à permettre, lorsque cette lame atteint une température de transition donnée lui imposant d'adopter sa forme mémorisée, de placer la surface déflectrice 32 dans la position déployée montrée sur la figure 4, assurant la déflection des corps étrangers tels que les grêlons. Par ailleurs, le système de déflecteur 30 comprend des moyens élastiques de rappel prennent la forme d'une lame élastique 42 couplée mécaniquement à la lame déflectrice 40, et superposée à cette dernière. Elle permet, lorsque la lame 40 présente une température inférieure à la température de transition donnée, de rappeler la surface déflectrice 32 dans sa position escamotée.

De manière plus précise, les deux lames 40, 42 formant un système bilames s'étendent sensiblement selon la direction de l'axe longitudinal de la turbomachine, et prennent chacune grossièrement la forme d'un rectangle, même si toute autre forme jugée adaptée par l'homme du métier pourrait être adoptée, sans sortir du cadre de l'invention.

Dans le mode de réalisation préféré, la lame déflectrice 40 présente radialement vers l'intérieur un crochet 44, dans lequel s'insère une extrémité aval de la lame élastique 42. Ce couplage mécanique permet de les conserver sensiblement parallèle l'une à l'autre, un espace de réception d'air chaud 46 étant néanmoins prévu entre les deux lames 40, 42.

Au niveau d'une extrémité amont de ces deux lames 40, 42, le système de déflecteur 30 présente un plot creux 48 formant un entrée d'air chaud 50 ouverte radialement vers l'intérieur, et communiquant avec l'espace inter-lames de réception d'air chaud 46. De plus, les extrémités amont de ces deux lames 40, 42 sont chacune solidaire du plot creux 48, comme le montre la figure 4.

A cet égard, il est noté que l'implantation du système de déflecteur 30 sur la virole interne de support 10 s'effectue de préférence par emboutissage du plot creux 48 traversant cette virole interne 10, son extrémité radiale inférieure 54 déformée par emboutissage assurant alors le maintien mécanique de l'ensemble du système 30.

Pour alimenter le système de déflecteur 30 en air chaud, il est prévu un distributeur d'air chaud 56 situé en regard de l'entrée d'air chaud 50 formée par le plot creux 48, et agencé radialement vers l'intérieur par rapport à cette dernière entrée. De préférence, ce distributeur 56 est alimenté en air chaud par un conduit d'air 58 raccordé sur le compresseur 3 de la turbomachine. De plus, on prévoit de préférence que le distributeur 56 présente une pluralité de sorties 60 espacées angulairement les unes des autres autour de l'axe longitudinal de turbomachine, chaque sortie 60 se situant alors en regard de l'une des entrées d'air chaud 50, comme montré sur la figure 4. Par conséquent, le distributeur 56, centré sur l'axe longitudinal de turbomachine, présente autant de sorties 60 qu'il est prévu de systèmes de déflecteur 30.

Le système 30 de déflecteur de grêlons et autres corps étrangers est apte à fonctionner de la manière suivante.

Tout d'abord en situation de repos, la force de rappel délivrée par la lame élastique 42 conduit à plaquer la lame déflectrice 40 contre la virole interne de support 10, comme cela est montré par les pointillés de la figure 4. La surface déflectrice 32 adopte alors une position escamotée dans laquelle elle présente une parfaite continuité aérodynamique avec la surface extérieure de la virole interne de support 10, de manière à perturber le moins possible l'air entrant dans le canal primaire 16. En particulier, chacune des extrémités aval et extrémité amont 62 de la surface déflectrice 32 affleure la surface extérieure de la virole interne de support 10. Pour ce faire, la virole 10 présente un réceptacle 65 dans lequel se loge le système bilames 40, 42.

Lorsqu'il est nécessaire d'assurer la déviation des grêlons afin de limiter leur pénétration dans le canal primaire 16, susceptible de provoquer l'extinction de la chambre de combustion 7, une commande adaptée permet de générer un signal conduisant au prélèvement d'air chaud au niveau du compresseur 3, cet air chaud étant alors acheminé vers le distributeur 56 par le conduit 58. L'air chaud se dirige ensuite vers les sorties 60, puis pénètre dans les entrées 50 associées, formées par les plots creux 48. L'air chaud situé dans chaque plot 48 se dirige ensuite vers l'espace inter-lames 46, à partir duquel il peut échauffer la lame déflectrice 40 réalisée en alliage à mémoire de forme. Sous l'effet de la chaleur reçue, la lame 40 atteignant sa température de transition se déforme rapidement pour adopter sa forme mémorisée, dans laquelle la surface déflectrice 32 est placée dans sa position déployée assurant la déflection des grêlons, comme montrée en trait plein sur la figure 4. Naturellement, la déformation observée de la lame déflectrice 40 s'effectue en contrant la force de rappel générée par la lame élastique 42, qui suit le déplacement de la lame 40 du fait de leur liaison mécanique procurée par le crochet 44.

Lorsque la surface déflectrice 32 atteint sa position déployée, son extrémité aval 62 se situe en amont de l'extrémité amont 20 du bec de séparation des flux 14, comme en témoigne la distance longitudinale entre ces deux éléments, référencée « d » sur la figure 4.

Plus particulièrement, en section longitudinale quelconque telle que celle montrée sur la figure 4, la ligne droite fictive 64, correspondant à une direction tangentielle de l'extrémité aval 62, passe en amont de l'extrémité amont 20 du bec de séparation 14, mais de préférence à forte proximité de cette extrémité 20.

Ainsi, les grêlons impactant l'extrémité aval 62 de la surface déflectrice 32, ou tout autre partie de cette surface 32, auront tendance à fuser selon la droite fictive 64, et ne pénétreront donc avantageusement pas au sein du canal primaire annulaire 16. Cela découle du fait qu'un grêlon a tendance, après l'impact, à fuser tangentiellement à la paroi de la structure impactée, et également au fait que la surface déflectrice 32 prend en coupe longitudinale la forme d'une ligne courbe s'ouvrant vers l'amont et radialement vers l'extérieur de la turbomachine. Cette dernière spécificité implique notamment que quelque soit le point d'impact d'un grêlon sur la surface déflectrice 32, celui-ci aura tendance à épouser la surface 32 jusqu'à son extrémité aval 62, de laquelle il sera alors éjecté selon la direction de la ligne droite fictive 64, lui permettant de passer radialement vers l'extérieur par rapport à l'entrée 24 du canal primaire annulaire 16.

Lorsque la déviation des grêlons n'est plus recherchée, il suffit alors de couper l'alimentation en air chaud, ce qui conduit la lame déflectrice 40 à présenter une température inférieure à sa température de transition, permettant à la lame élastique 42 de rappeler la lame déflectrice 32 dans sa position de repos, plaquée contre la virole interne de support 10 des aubages 12.

Bien entendu, diverses modifications peuvent être apportées par l'homme du métier à l'invention qui vient d'être décrite, uniquement à titre d'exemples non limitatifs.

## Revendications

1. Partie avant (1) de turbomachine comprenant une virole interne de support (10) des aubages directeurs de sortie de soufflante (12), un bec de séparation des flux (14) duquel sont issus un canal primaire annulaire (16) et un canal secondaire annulaire (18) de turbomachine,
qui comprend en outre au moins un système de déflecteur (30) destiné à empêcher/iimiter l'accès de corps étrangers tels que des grêlons à l'intérieur dudit canal primaire (16) de la turbomachine, ledit système de déflecteur (30) comprenant au moins une surface déflectrice (32) ainsi qu'un actionneur (34) permettant de déplacer ladite surface déflectrice d'une position escamotée à une position déployée assurant la déflection des corps étrangers, et/ou inversement, **caractérisée en ce** qui
ledit système de déflecteur (30) est monté sur ladite virole interne de support (10) des aubages directeurs de sortie de soufflante (12), de sorte qu'en position déployée, une extrémité aval (62) de ladite surface déflectrice (32) se situe en amont dudit bec de séparation des flux (14).

2. Partie avant (1) de turbomachine selon la revendication 1, **caractérisée en ce que** ledit système de déflecteur (30) est monté sur ladite virole interne de support (10) des aubages directeurs de sortie de soufflante (12), en aval desdits aubages directeurs de sortie de soufflante (12).

3. Partie avant (1) de turbomachine selon la revendication 1 ou la revendication 2, **caractérisée en ce que**, en section longitudinale quelconque passant par ledit système de déflecteur (30), une ligne droite fictive (64) correspondant à une direction tangentielle de ladite extrémité aval (62) de ladite surface déflectrice (32), en position déployée, passe en amont d'une extrémité amont (20) dudit bec de séparation (14).

4. Partie avant (1) de turbomachine selon l'une quelconque des revendications précédentes, **caractérisée en ce que** ledit actionneur (34) est réalisé en alliage à mémoire de forme de manière à permettre, lorsqu'il atteint une température de transition donnée lui imposant d'adopter sa forme mémorisée, de placer ladite surface déflectrice (32) dans la position déployée assurant la déflection des corps étrangers, et
**en ce que** ledit système de déflecteur (30) comprend en outre des moyens élastiques de rappel permettant, lorsque ledit actionneur (34) présente une température inférieure à ladite température de transition donnée, de rappeler ladite surface déflectrice (32) dans sa position escamotée.

5. Partie avant (1) de turbomachine selon la revendication 4, **caractérisée en ce que** ledit actionneur (34) et ladite surface déflectrice (32) sont formés par un même élément réalisé en alliage à mémoire de forme.

6. Partie avant (1) de turbomachine selon la revendication 5, **caractérisée en ce que** ledit élément réalisé en alliage à mémoire de forme prend la forme d'une lame déflectrice (40).

7. Partie avant (1) de turbomachine selon la revendication 6, **caractérisée en ce que** lesdits moyens élastiques de rappel prennent la forme d'une lame élastique (42) couplée mécaniquement à ladite lame déflectrice (40), et superposée à cette dernière.

8. Partie avant (1) de turbomachine selon la revendication 7, **caractérisée en ce qu'**un espace de réception d'air chaud (46) est prévu entre ladite lame élastique (42) et ladite lame déflectrice (40).

9. Partie avant (1) de turbomachine selon la revendication 8, **caractérisée en ce que** ledit système de déflecteur (30) comporte une entrée d'air chaud (50) communiquant avec ledit espace de réception d'air chaud (46).

10. Partie avant (1) de turbomachine selon la revendication 9, **caractérisée en ce que** ladite entrée d'air chaud (50) prend la forme d'un plot creux (48).

11. Partie avant (1) de turbomachine selon l'une quelconque des revendications précédentes, **caractérisée en ce qu'**elle est équipée d'une pluralité de systèmes de déflecteur (30) de corps étrangers, espacés angulairement les uns des autres autour d'un axe longitudinal (22) de turbomachine.

12. Partie avant (1) de turbomachine selon la revendication 11, **caractérisée en ce que** l'implantation de chaque système de déflecteur (30) de corps étrangers sur ladite virole interne de support (10) des aubages directeurs de sortie de soufflante (12) est réalisée par emboutissage du plot creux (48) formant entrée d'air chaud du système de déflecteur, et traversant cette virole interne (10).

13. Partie avant (1) de turbomachine selon la revendication 12, **caractérisée en ce que** ladite entrée d'air chaud (50) de chaque système de déflecteur (30) de corps étrangers traverse ladite virole interne de support (10) des aubages directeurs de sortie de soufflante (12), et **en ce que** ladite partie avant de turbomachine comprend un distributeur d'air chaud (56) situé en regard et radialement vers l'intérieur par rapport à chaque système de déflecteur (30).

14. Partie avant (1) de turbomachine selon la revendication 13, **caractérisée en ce que** ledit distributeur d'air chaud (56) est alimenté en air chaud par de l'air provenant d'un compresseur (3) de la turbomachine.

15. Partie avant (1) de turbomachine selon la revendication 13 ou la revendication 14, **caractérisée en ce que** ledit distributeur (56) présente une pluralité de sorties (60) espacées angulairement les unes des autres autour dudit axe longitudinal (22) de turbomachine, chaque sortie (60) étant en regard respectivement d'une entrée d'air chaud (50) d'un système de déflecteur (30) de corps étrangers.

16. Partie avant (1) de turbomachine selon l'une quelconque des revendications précédentes, **caractérisée en ce qu'**en position déployée assurant la déflection des corps étrangers, ladite surface déflectrice (32) prend en coupe longitudinale la forme d'une ligne courbe s'ouvrant vers l'amont et radialement vers l'extérieur de la turbomachine.

17. Partie avant (1) de turbomachine selon l'une quelconque des revendications précédentes, **caractérisée en ce qu'**en position escamotée, ladite extrémité aval (64) de la surface déflectrice affleure la surface extérieure de ladite virole interne de support (10) des aubages directeurs de sortie de soufflante (12).

18. Partie avant (1) de turbomachine selon l'une quelconque des revendications précédentes, **caractérisée en ce que** ledit actionneur (34) est réalisé en alliage à mémoire de forme de manière à permettre, lorsqu'il atteint une température de transition donnée lui imposant d'adopter sa forme mémorisée, de placer ladite surface déflectrice (32) dans la position déployée assurant la déflection des corps étrangers, et
**en ce que** ledit système de déflecteur comprend en outre des moyens élastiques de rappel (42) permettant, lorsque ledit actionneur présente une température inférieure à ladite température de transition donnée, de rappeler ladite surface déflectrice (32) dans sa position escamotée.

19. Turbomachine comprenant une partie avant (1) selon l'une quelconque des revendications précédentes.

## Claims

1. A turbomachine front portion (1) comprising an internal support shroud (10) for the fan outlet guide vanes (12), and a flow splitter fairing (14) from which an annular primary duct (16) and an annular secondary duct (18) of the turbomachine, originate, which comprises at least one deflector system (30) intended to prevent/limit the ingress of foreign bodies such as hailstones inside said primary duct (16) of the turbomachine, said deflector system comprising at least one deflecting surface (32) together with an actuator (34) for moving said deflecting surface from a retracted position to a deployed position for deflecting the foreign bodies, and/or vice versa, **characterized in that** said deflector system (30) is mounted on said internal support shroud (10) for the fan outlet guide vanes such that, in the deployed position, a downstream end (62) of said deflecting surface (32) is situated upstream of said flow splitter fairing (14).

2. The turbomachine front portion as claimed in claim 1, **characterized in that** said deflector system (30) is mounted on said internal support shroud (10) for the fan outlet guide vanes (12), downstream of said fan outlet guide vanes (12).

3. The turbomachine front portion (1) as claimed in claim 1, **characterized in that**, in any longitudinal section passing through said deflector system (30), an imaginary straight line (64) corresponding to a tangential direction of said downstream end (62) of said deflecting surface (32), in the deployed position, passes upstream of an upstream end (20) of said splitter fairing (14).

4. The turbomachine front portion as claimed in claim 1, **characterized in that** said actuator (34) is made of shape memory alloy so as to make it possible, once it reaches a given transition temperature causing it to adopt its memorized shape, to place said deflecting surface (32) in the deployed position for deflecting the foreign bodies, and **in that** said deflector system (30) additionally comprises elastic return means making it possible, when said actuator (34) has a temperature below said given transition temperature, to return said deflecting surface (32) into its retracted position.

5. The turbomachine front portion (1) as claimed in claim 4, said actuator (34) and said deflecting surface (32) are formed by one and the same element made of shape memory alloy.

6. The turbomachine front portion (1) as claimed in claim 5, **characterized in that** said element made of shape memory alloy takes the form of a deflecting strip (40).

7. The turbomachine front portion as claimed in claim 6, **characterized in that** said elastic return means take the form of an elastic strip (42) coupled mechanically to and superposed on said deflecting strip (40).

8. The turbomachine front portion (1) as claimed in claim 7, **characterized in that** a space for admitting hot air (46) is provided between said elastic strip (42) and said deflecting strip (40).

9. The turbomachine front portion (1) as claimed in claim 8, **characterized in that** said deflector system (30) includes a hot air inlet (50) communicating with said space for admitting hot air (46).

10. The turbomachine front portion (1) as claimed in claim. 9, **characterized in that** said hot air inlet (50) takes the form of a hollow stud (48).

11. The turbomachine front portion (1) as claimed in claim 1, **characterized in that** it is equipped with a plurality of foreign body deflector systems (30) spaced angularly from one another about a longitudinal axis (22) of the turbomachine.

12. The turbomachine front portion (1) as claimed in claim 11, **characterized in that** each foreign body deflector system (30) is installed on said internal support shroud (40) for the fan outlet guide vanes (12) by stamping the hollow stud (48) which forms the hot air inlet of the deflector system and which passes through this internal shroud (10).

13. The turbomachine front portion (1) as claimed in claim 12, **characterized in that** said hot air inlet (50) of each foreign body deflector system (30) passes through said internal support shroud (10) for the fan outlet guide vanes (12), and **in that** said turbomachine front portion comprises a hot air distributor (56) situated opposite to and radially inwardly with respect to each deflector system (30).

14. The turbomachine front portion (1) as claimed in claim 13, **characterized in that** said hot air distributor (56) is supplied with hot air using air from a compressor (3) of the turbomachine.

15. The turbomachine front portion (1) as claimed in claim 13 or claim 14, **characterized in that** said distributor (56) has a plurality of outlets (60) spaced angularly from one another about said longitudinal axis (22) of the turbomachine, each outlet (60) being opposite one hot air inlet (50) of a foreign body deflector system (30), respectively.

16. The turbomachine front portion (1) as claimed in any of the preceding claims, **characterized in that**, in the deployed position for deflecting the foreign bodies, said deflecting surface (32) takes the form, in longitudinal section, of a curved line which opens in the upstream direction and radially toward the outside of the turbomachine.

17. The turbomachine front portion (1) as claimed in any of the preceding claims, **characterized in that**, in the retracted position, said downstream end (64) of the deflecting surface is flush with the outer surface of said internal support shroud (10) for the fan outlet guide vanes (12).

18. The turbomachine front portion (1) as claimed in any of the preceding claims, **characterized in that** said actuator (34) is made of shape memory alloy so as to make it possible, once it reaches a given transition temperature causing it to adopt its memorized shape, to place said deflecting surface (32) in the deployed position for deflecting the foreign bodies, and **in that** said deflector system additionally comprises elastic return means (42) making it possible, when said actuator has a temperature below said given transition temperature, to return said deflecting surface (32) into its retracted position.

19. A turbomachine comprising a front portion (1) as claimed in any of the preceding claims.

## Patentansprüche

1. Vorderteil (1) einer Turbomaschine, umfassend einen inneren Tragring (10) von Gebläseaustrittsleitschaufeln (12), eine Nase zum Trennen der Ströme (14), von der ein ringförmiger Primärkanal (16) und ein ringförmiger Sekundärkanal (18) der Turbomaschine abgehen,
das ferner wenigstens ein Ablenksystem (30) umfasst, welches dazu bestimmt ist, den Zutritt von Fremdkörpern, wie Hagelkörnern, in das Innere des Primärkanals (16) der Turbomaschine zu verhindern/begrenzen, wobei das Ablenksystem (30) wenigstens eine Ablenkfläche (32) sowie einen Aktor (34) umfasst, der ermöglicht, die Ablenkfläche aus einer eingefahrenen Position in eine ausgefahrene Position, welche das Ablenken der Fremdkörper sicherstellt, zu bewegen und/oder umgekehrt,
**dadurch gekennzeichnet, dass** das Ablenksystem (30) an dem inneren Tragring (10) der Gebläseaustrittsleitschaufeln (12) angebracht ist, so dass in der ausgefahrenen Position ein stromabwärtiges Ende (62) der Ablenkfläche (32) vor der Nase zum Trennen der Ströme (14) gelegen ist.

2. Vorderteil (1) einer Turbomaschine, nach Anspruch 1, **dadurch gekennzeichnet, dass** das Ablenksystem (30) an dem inneren Tragring (10) der Gebläseaustrittsleitschaufeln (12), stromabwärts der Gebläseaustrittsleitschaufeln (12) angebracht ist.

3. Vorderteil (1) einer Turbomaschine, nach Anspruch 1 oder Anspruch 2, **dadurch gekennzeichnet, dass** in einem durch das Ablenksystem (30) verlaufenden beliebigen Längsschnitt eine fiktive Gerade (64), die einer Tangentialrichtung des stromabwärtige Endes (62) der Ablenkfläche (32) in der ausgefahrenen Position entspricht, vor einem stromaufwärtigen Ende (20) der Trennnase (14) verläuft.

4. Vorderteil (1) einer Turbomaschine, nach einem der vorhergehenden Ansprüche, **dadurch gekennzeichnet, dass** der Aktor (34) aus einer Formgedächtnislegierung gefertigt ist, um dann, wenn er eine vorgegebene Übergangstemperatur erreicht, die ihn dazu zwingt, seine erinnerte Form anzunehmen, zu ermöglichen, die Ablenkfläche (32) in die ausgefahrene Position zu bringen, die das Ablenken der Fremdkörper sicherstellt, und
dass das Ablenksystem (30) ferner elastische Rückstellmittel umfasst, die dann, wenn der Aktor (34) eine Temperatur unterhalb der vorgegebenen Übergangstemperatur aufweist, das Rückstellen der Ablenkfläche (32) in ihre eingefahrene Position ermöglichen.

5. Vorderteil (1) einer Turbomaschine, nach Anspruch 4, **dadurch gekennzeichnet, dass** der Aktor (34) und die Ablenfläche (32) von einem gleichen, aus einer Formgedächtnislegierung gefertigten Element gebildet sind.

6. Vorderteil (1) einer Turbomaschine, nach Anspruch 5, **dadurch gekennzeichnet, dass** das aus einer Formgedächtnislegierung gefertigte Element die Form einer Ablenkzunge (40) annimmt.

7. Vorderteil (1) einer Turbomaschine, nach Anspruch 6, **dadurch** gekenntzeichnet, dass die elastischen Rückstellmittel die Form einer elastischen Zunge (42) annehmen, die mit der Ablenkzunge (40) mechanisch gekoppelt und über dieser angeordnet ist.

8. Vorderteil (1) einer Turbomaschine, nach Anspruch 7, **dadurch gekennzeichnet, dass** ein Heißluftaufnahmeraum (46) zwischen der elastischen Zunge (42) und der Ablenkzunge (40) vorgesehen ist.

9. Vorderteil (1) einer Turbomaschine, nach Anspruch 8, **dadurch gekennzeichnet, dass** das Ablenksystem (30) einen Heißlufteinlass (50) umfasst, der mit dem Heißluftaufnahmeraum (46) in Verbindung steht.

10. Vorderteil (1) einer Turbomaschine, nach Anspruch 9, **dadurch gekennzeichnet, dass** der Heißlufteinlass (50) die Form eines Hohlstiftes (48) annimmt.

11. Vorderteil (1) einer Turbomaschine, nach einem der vorhergehenden Ansprüche, **dadurch gekennzeichnet, dass** es mit einer Vielzahl von Systemen zum
Ablenken (30) von Fremdkörpern ausgestattet ist, die um eine Längsachse (22) der Turbomaschine winkelmäßig voneinander beabstandet sind.

12. Vorderteil (1) einer Turbomaschine, nach Anspruch 11, **dadurch gekennzeichnet, dass** das Anbringen eines jeden Fremdkörperablenksystems (30) an dem inneren Tragring (10) der Gebläseaustrittsleitschaufeln (12) durch Tiefziehen des Hohlstiftes (48), der einen Heißlufteinlass des Ablenksystems bildet und diesen Innenring (10) durchgreift, realisiert ist.

13. Vorderteil (1) einer Turbomaschine, nach Anspruch 12, **dadurch gekennzeichnet, dass** der Heißlufteinlass (50) eines jeden Fremdkörperablenksystems (30) den inneren Tragring (10) der Gebläseaustrittsleitschaufeln (12) durchquert und dass das Turbomaschinenvorderteil einen Heißluftverteiler (56) umfasst, der - bezogen auf jedes Ablenksystem (30) - gegenüberliegend und radial nach innen angeordnet ist.

14. Vorderteil (1) einer Turbomaschine, nach Anspruch 13, **dadurch gekennzeichnet, dass** der Heißluftverteiler (56) durch Luft, die von einem Verdichter (3) der Turbomaschine stammt, mit Heißluft beaufschlagt wird.

15. Vorderteil (1) einer Turbomaschine, nach Anspruch 13 oder Anspruch 14, **dadurch gekennzeichnet, dass** der Verteiler (56) eine Vielzahl von Auslässen (60) aufweist, die um die Längsachse (22) der Turbomaschine winkelmäßig voneinander beabstandet sind, wobei jeder Auslass (60) jeweils einem Heißlufteinlass (50) eines Fremdkörperablenksystems (30) gegenüberliegt.

16. Vorderteil (1) einer Turbomaschine, nach einem der vorhergehenden Ansprüche, **dadurch gekennzeichnet, dass** die Ablenkfläche (32) in der ausgefahrenen Position, die das Ablenken der Fremdkörper sicherstellt, im Längsschnitt die Form einer gekrümmten Linie annimmt, die sich stromaufwärts und radial zur Außenseite der Turbomaschine öffnet.

17. Vorderteil (1) einer Turbomaschine, nach einem der vorhergehenden Ansprüche, **dadurch gekennzeichnet, dass** in der eingefahrenen Position das stromabwärtige Ende (64) der Ablenkfläche mit der Außenfläche des inneren Tragrings (10) der Gebläseaustrittsleitschaufeln (12) fluchtet.

18. Vorderteil (1) einer Turbomaschine, nach einem der vorhergehenden Ansprüche, **dadurch gekennzeichnet, dass** der Aktor (34) aus einer Formgedächtnislegierung gefertigt ist, um dann, wenn er eine vorgegeben Übergangstemperatur erreicht, die ihn dazu zwingt, seine erinnerte Form anzunehmen, zu ermöglichen, die Ablenkfläche (32) in die ausgefahrene Position zu bringen, die das Ablenken der Fremdkörper sicherstellt, und
dass das Ablenksystem ferner elastische Rückstellmittel (42) umfasst, die dann, wenn der Aktor eine Temperatur unterhalb der vorgegebenen Übergangstemperatur aufweist, das Rückstellen der Ablenkfläche (32) in ihre eingefahrene Position ermöglichen.

19. Turbomaschine, die ein Vorderteil (1) nach einem der vorhergehenden Ansprüche umfasst.
